# EUROPEAN PATENT APPLICATION

(11) **EP 4 207 821 A1**
(43) Date of publication of application: **05.07.2023**
(21) Application number: 21879317.2
(22) Date of filing: 11.10.2021
(51) Int. Cl.: H04W 4/02

(54) **TRANSMITTING ELECTRONIC DEVICE AND RECEIVING ELECTRONIC DEVICE AND METHODS FOR WIRELESS COMMUNICATION**

(30) Priority: 16.10.2020 CN 202011109690
(71) Applicant: Sony Group Corporation, Minato-Ku, Tokyo, 108-0075 (JP)
(72) Inventor: SUN, Chen, Beijing 100028 (CN); WANG, Xiaoxue, Beijing 100028 (CN)
(74) Representative: D Young & Co LLP
(86) International application number: PCT/CN2021/122960
(87) International publication number: WO 2022/078272

(57) **Abstract**

Provided by the present disclosure are a transmitting electronic device and receiving electronic device and methods for wireless communication, wherein the transmitting electronic device for wireless communication comprises a processing circuit. The processing circuitry is configured to: determine at least one first positional relationship between the transmitting electronic device and at least one other transmitting electronic device located within a predetermined range of the transmitting electronic device, and a second positional relationship between the transmitting electronic device and the receiving electronic device; receive information regarding a candidate resource set corresponding to the receiving electronic device as assistance information, wherein the candidate resource set is a set consisting of time-frequency resource blocks that can be used by the receiving electronic device to receive data; and on the basis of the at least one first positional relationship, the second positional relationship, and the assistance information, select at least one time-frequency resource block for transmitting data from a resource pool so as to form a final available resource set.

## Description

### FIELD

The present disclosure relates to the technical field of wireless communications, in particular to helping a transmitting electronic apparatus to correctly select an available time-frequency resource block, and more specifically to a transmitting electronic apparatus, a receiving electronic apparatus and a method for wireless communications, as well as a computer-readable storage medium.

### BACKGROUND

In the existing communication mode, how to help a transmitting electronic apparatus to correctly select available time-frequency resource blocks so as to avoid resource collision and/or improve resource utilization efficiency is a key issue.

### SUMMARY

A brief summary of the present invention is given below, to provide a basic understanding of some aspects of the present invention. It should be understood that the following summary is not an exhaustive summary of the present invention. It does not intend to determine a key or important part of the present invention, nor does it intend to limit the scope of the present invention. Its object is only to present some concepts in a simplified form, which serves as a preamble of a more detailed description to be discussed later.

According to one aspect of the present disclosure, there is provided a transmitting electronic apparatus for wireless communications. The transmitting electronic apparatus is configured to transmit data to a receiving electronic apparatus in communication with the transmitting electronic apparatus, and the transmitting electronic apparatus includes processing circuitry, wherein the processing circuitry is configured to: determine at least one first positional relationship between the transmitting electronic apparatus and at least one other transmitting electronic apparatus located within a predetermined range of the transmitting electronic apparatus, and a second positional relationship between the transmitting electronic apparatus and the receiving electronic apparatus; receive information about a candidate resource set corresponding to the receiving electronic apparatus as assistance information, where the candidate resource set is formed by time-frequency resource blocks used by the receiving electronic apparatus for receiving the data; and select, based on the at least one first positional relationship, the second positional relationship and the assistance information, at least one time-frequency resource block for transmitting the data from a resource pool to form a finally available resource set.

According to one aspect of the present disclosure, there is provided a receiving electronic apparatus for wireless communications. The receiving electronic apparatus is configured to receive data from a transmitting electronic apparatus in communication with the receiving electronic apparatus, and the receiving electronic apparatus includes processing circuitry, wherein the processing circuitry is configured to: report information about a candidate resource set corresponding to the receiving electronic apparatus as assistance information to the transmitting electronic apparatus, where the candidate resource set is formed by time-frequency resource blocks used by the receiving electronic apparatus for receiving the data; and transmit positional relationship information about a positional relationship between the receiving electronic apparatus and the transmitting electronic apparatus to the transmitting electronic apparatus to cooperate with the transmitting electronic apparatus to select at least one time-frequency resource block for transmitting the data from a resource pool based on the assistance information and the positional relationship information.

According to another aspect of the present disclosure, there is provided a method for wireless communications. The method is performed by a transmitting electronic apparatus which transmits data to a receiving electronic apparatus in communication with the transmitting electronic apparatus, where the method includes: determining at least one first positional relationship between the transmitting electronic apparatus and at least one other transmitting electronic apparatus located within a predetermined range of the transmitting electronic apparatus, and a second positional relationship between the transmitting electronic apparatus and the receiving electronic apparatus; receiving information about a candidate resource set corresponding to the receiving electronic apparatus as assistance information, where the candidate resource set is formed by time-frequency resource blocks used by the receiving electronic apparatus for receiving the data; and selecting, based on the at least one first positional relationship, the second positional relationship and the assistance information, at least one time-frequency resource block for transmitting the data from a resource pool to form a finally available resource set.

According to another aspect of the present disclosure, there is provided a method for wireless communications. The method is performed by a receiving electronic apparatus which receives data from a transmitting electronic apparatus in communication with the receiving electronic apparatus. The method includes: reporting information about a candidate resource set corresponding to the receiving electronic apparatus as assistance information to the transmitting electronic apparatus, where the candidate resource set is formed by time-frequency resource blocks used by the receiving electronic apparatus for receiving the data; and transmitting positional relationship information about a positional relationship between the receiving electronic apparatus and the transmitting electronic apparatus to the transmitting electronic apparatus to cooperate with the transmitting electronic apparatus to select at least one time-frequency resource block for transmitting the data from a resource pool based on the assistance information and the positional relationship information.

According to other aspects of the present invention, there are further provided a computer program code and a computer program product for implementing the above-mentioned methods for wireless communications, as well as a computer-readable storage medium on which the computer program code for implementing the above-mentioned methods for wireless communications is recorded.

These and other advantages of the present invention will be more apparent through the following detailed description of preferred embodiments of the present invention in conjunction with the accompanying drawings.

### BRIEF DESCRIPTION OF THE DRAWINGS

In order to further set forth the above and other advantages and features of the present invention, specific embodiments of the present invention will be further described in detail below in conjunction with the accompanying drawings. The accompanying drawings together with the following detailed description are included in this specification and form a part of this specification. Elements with identical functions and structures are denoted by identical reference numerals. It should be understood that, these figures only describe typical examples of the present invention, and should not be regarded as limitations to the scope of the present invention. In the accompanying drawings:
FIG. 1 is a block diagram showing functional modules of a transmitting electronic apparatus for wireless communications according to an embodiment of the present disclosure;
FIG. 2 is a schematic diagram showing time-frequency resource selection performed by the transmitting user equipment in sidelink resource selection mode 2 according to the conventional technology;
FIG. 3 is a schematic diagram showing hidden nodes according to the conventional technology;
FIG. 4 is a schematic diagram showing exposed nodes according to the conventional technology;
FIG. 5 is a schematic diagram showing an example of a communication scenario of a transmitting electronic apparatus according to an embodiment of the present disclosure;
FIG. 6 is a block diagram showing functional modules of a receiving electronic apparatus for wireless communications according to an embodiment of the present disclosure;
FIG. 7 is a flowchart showing a method for wireless communications according to an embodiment of the present disclosure;
FIG. 8 is a flowchart showing a method for wireless communications according to another embodiment of the present disclosure;
FIG. 9 is a block diagram showing a first example of a schematic configuration of an eNB or gNB to which the technology of the present disclosure can be applied;
FIG. 10 is a block diagram showing a second example of a schematic configuration of an eNB or gNB to which the technology of the present disclosure can be applied;
FIG. 11 is a block diagram showing an example of a schematic configuration of a smart phone to which the technology of the present disclosure can be applied;
FIG. 12 is a block diagram showing an example of a schematic configuration of automobile navigation equipment to which the technology of the present disclosure can be applied;
FIG. 13 is a block diagram of an exemplary structure of a universal personal computer in which the methods and/or apparatuses and/or systems according to the embodiments of the present invention can be implemented.

### DETAILED DESCRIPTION OF THE EMBODIMENTS

Hereinafter, exemplary embodiments of the present disclosure will be described in conjunction with the accompanying drawings. For the sake of clarity and conciseness, the description does not describe all features of actual embodiments. However, it should be understood that in developing any such actual embodiment, many decisions specific to the embodiments must be made, so as to achieve specific objects of a developer; for example, those limitation conditions related to systems and services are satisfied, and these limitation conditions possibly will vary as embodiments are different. In addition, it should also be appreciated that, although developing work may be very complicated and time-consuming, such developing work is only routine tasks for those skilled in the art benefiting from the present disclosure.

It should also be noted herein that, to avoid the present invention from being obscured due to unnecessary details, only those apparatus structures and/or processing steps closely related to the solution according to the present invention are shown in the accompanying drawings, while omitting other details not closely related to the present invention.

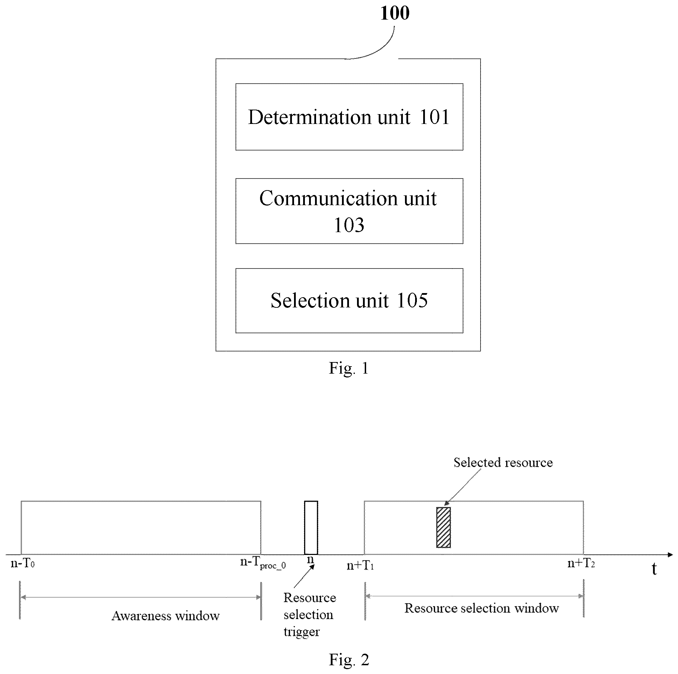

FIG. 1 is a block diagram showing functional modules of a transmitting electronic apparatus 100 for wireless communications according to an embodiment of the present disclosure. The transmitting electronic apparatus 100 is configured to transmit data to a receiving electronic apparatus communicating with the transmitting electronic apparatus 100. As shown in FIG. 1, the transmitting electronic apparatus 100 includes: a determination unit 101, a communication unit 103, and a selection unit 105. The determination unit 101 is configured to determine at least one first positional relationship between the transmitting electronic apparatus 100 and at least one other transmitting electronic apparatus located within a predetermined range of the transmitting electronic apparatus 100, and a second positional relationship between the transmitting electronic apparatus 100 and the receiving electronic apparatus. The communication unit 103 is configured to receive information about a candidate resource set corresponding to the receiving electronic apparatus as assistance information. The candidate resource set is formed by time-frequency resource blocks used by the receiving electronic apparatus for receiving the data. The selection unit 105 is configured to select, based on the at least one first positional relationship, the second positional relationship and the assistance information, at least one time-frequency resource block for transmitting the data from a resource pool to form a finally available resource set.

The determination unit 101, the communication unit 103 and the selection unit 105 may be may be implemented by one or more processing circuitries which may be implemented as, for example, a chip.

The transmitting electronic apparatus 100 may be arranged on user equipment (UE) side or communicably connected to a UE, for example. It should also be noted herein that, the transmitting electronic apparatus 100 may be implemented at chip level or at device level. For example, the transmitting electronic apparatus 100 may work as user equipment itself, and may also include external devices such as a memory, a transceiver (not shown in the figure) and the like. The memory may be used to store programs and related data information that the user equipment needs to execute in order to implement various functions. The transceiver may include one or more communication interfaces to support communication with different devices (e.g., a base station, other user equipment, etc.), and the implementation form of the transceiver is not specifically limited here. The base station may be, for example, an eNB or a gNB.

As an example, the transmitting electronic apparatus 100 performs unicast communication with the receiving electronic apparatus.

As an example, the other transmitting electronic apparatus may be user equipment, which is different from the transmitting electronic apparatus 100, for transmitting data.

As an example, the predetermined range may be an area of any shape with the transmitting electronic apparatus 100 as a reference point. For example, the predetermined range may be a circular area with a predetermined radius centered on the transmitting electronic apparatus 100. Those skilled in the art may determine the size of the predetermined radius according to experiences or actual application scenarios. Those skilled in the art can also think of other examples of the predetermined range, which are not be described in detail herein.

As an example, the determining unit 101 may determine, for each of the at least one other transmitting electronic apparatus, the first positional relationship between the transmitting electronic apparatus 100 and the other transmitting electronic apparatus.

As an example, the first positional relationship and the second positional relationship may be determined based on position information of the transmitting electronic apparatus 100, position information of each other transmitting electronic apparatus and position information of the receiving electronic apparatus. As an example, the first positional relationship and the second positional relationship may be determined based on reference signal strengths of reference signals received from the other transmitting electronic apparatus and the receiving electronic apparatus. Those skilled in the art can also think of other ways of determining the first positional relationship and the second positional relationship. A specific example of how to determine the first positional relationship and the second positional relationship will be given below.

As an example, the resource pool may be composed of predetermined time-frequency resource blocks. As an example, in addition to the predetermined time-frequency resource blocks, the resource pool may also include one or more time-frequency resource blocks in an abnormal resource pool. The candidate resource set corresponding to the receiving electronic apparatus is at least a part of the resource pool.

In the following, a set composed of time-frequency resource blocks for the transmitting electronic apparatus to transmit data serves as the candidate resource set corresponding to the transmitting electronic apparatus 100. The candidate resource set corresponding to the transmitting electronic apparatus 100 is at least a part of the resource pool.

As an example, the candidate resource set corresponding to the receiving electronic apparatus and the candidate resource set corresponding to the transmitting electronic apparatus 100 may be selected according to conventional technology. For example, in 5G NR sidelink communication, the transmitting electronic apparatus 100 and the receiving electronic apparatus may adopt resource selection mode 2 (mode 2) to select corresponding candidate resource sets, respectively.

As an example, the transmitting electronic apparatus 100 according to the embodiment of the present disclosure may use the time-frequency resource blocks in the finally available resource set to transmit data to the receiving electronic apparatus.

In the conventional technology, the candidate resource set corresponding to the receiving electronic apparatus, the first positional relationship and the second positional relationship are not considered in the selection of the time-frequency resource block for the transmitting electronic apparatus to transmit data to the receiving electronic apparatus. For example, in the resource selection mode 2 according to the conventional technology, the candidate resource set corresponding to the transmitting electronic apparatus is directly determined as the finally available resource set, without considering the candidate resource set corresponding to the receiving electronic apparatus, the first positional relationship and the second positional relationship, resulting in a high probability of resource collision, thereby reducing the reliability of data transmission performed by the transmitting electronic apparatus, and/or excessively excluding resources that are originally available to the transmitting electronic apparatus, thereby reducing resource utilization efficiency.

Instead, the transmitting electronic apparatus 100 according to the embodiment of the present disclosure correctly selects available time-frequency resources based on the at least one first positional relationship, the second positional relationship, and the assistance information, thereby reducing the probability of resource collision and thus improving data transmission efficiency, and/or avoiding excessive exclusion of originally available resources and thus improving resource utilization efficiency.

As an example, the selection unit 105 may be configured to select the finally available resource set in a scenario of sidelink resource selection mode 2.

In 5G NR sidelink communication, there are two resource selection modes. One is that the base station schedules sidelink resources, which is called a resource selection mode 1 (mode 1), and the other is that the UE independently selects resources, which is called a resource selection mode 2 (mode 2).

FIG. 2 is a schematic diagram illustrating selection of time-frequency resource performed by user equipment in the sidelink resource selection mode 2 according to the conventional technology. In the following description, sometimes time-frequency resources are simply referred to as resources.

User equipment (referred to as UE) firstly determines a candidate resource set in advance through a resource awareness process. As shown in FIG. 2, during the resource selection process in the sidelink resource selection mode 2, a data packet triggers resource selection at a moment n, the UE excludes resources based on the result of awareness during an awareness window [n-To, n-T_{proc,0}]. During [n-To, n-T_{proc,0}], the UE decodes sidelink control information (SCI) received from other user equipment, and obtains information on resources already occupied (reserved resources) based on the decoded SCI, so as to exclude these resources. The UE also measures reference signal received power (RSRP) strength across the frequency band. If the RSRP strength exceeds a threshold, the UE determines that the corresponding frequency domain resources are occupied (reserved) by other user equipment, thereby excluding these resources. The remaining resources after exclusion are determined to be available candidate resources. The candidate resource set is a set of available candidate resources. Next, the UE adopts a random resource selection mechanism to select one or more resources from the candidate resource set for transmission. For example, the UE randomly selects a resource whose time domain is between [n+T₁, n+T₂] from the candidate resource set as a resource for transmitting (initially transmitting and/or retransmitting) data. For example, as shown in FIG. 2, the LTE selects a resource indicated by a rectangular box filled with oblique lines as the selected resource.

In FIG. 2, T₀ is a maximum range threshold of the awareness window. T_{proc,0} represents a duration that the UE decodes the SCI and measures the RSRP. T₁ represents a duration from the moment n when the UE triggers the resource selection to a moment when the LTE obtains the earliest candidate resource. T2 represents a maximum range threshold of the resource selection window, which is smaller than an allowable delay of a data block to be transmitted.

As an example, the transmitting electronic apparatus 100, each of the other transmitting electronic apparatuses, and the receiving electronic apparatus may adopt the sidelink resource selection mode 2 described in conjunction with FIG. 2 to select corresponding candidate resource sets, respectively. Hereinafter, the candidate resource set selected by each of the other transmitting electronic apparatus is referred to as the candidate resource set corresponding to the other transmitting electronic apparatus.

If the transmitting electronic apparatus 100 determines the corresponding candidate resource set selected through the resource selection mode described in FIG. 2 as the finally available resource set, the influence of hidden nodes and/or exposed nodes cannot be avoided.

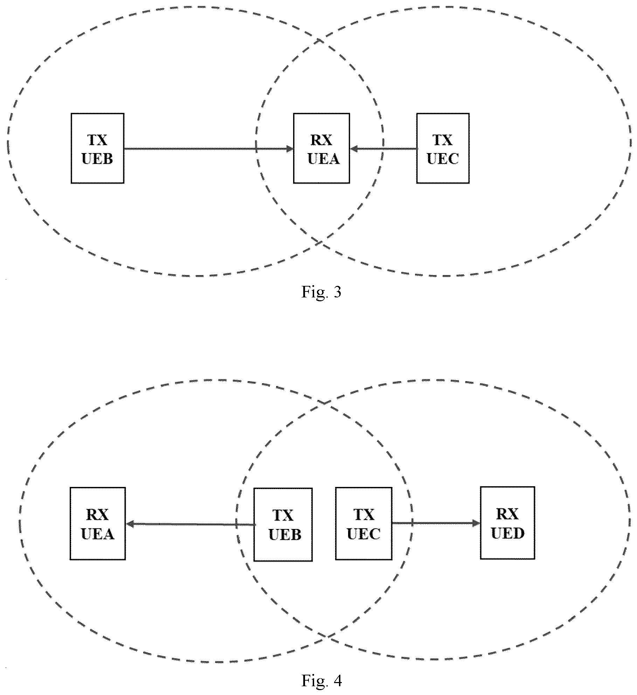

FIG. 3 is a schematic diagram showing hidden nodes according to the present disclosure.

In FIG. 3, it is assumed that user equipment TX UEB for transmission and user equipment RX UEA for reception are a transmission pair, and user equipment TX UEC for transmission is close to the RX UEA and far from the TX UEB. The TX UEB fails to receive the SCI of the TX UEC and thus correctly decode the SCI of the TX UEC, and the measured value of the RSRP of the reference signal from the TX UEC measured by the TX UEB is lower than a threshold. Therefore, according to the sidelink resource selection mode 2 described in conjunction with FIG. 2, the TX UEB fails to correctly exclude the resources reserved by the TX UEC, resulting in a high probability of resource collision. In a case that the TX UEB and the TX UEC select the same resource to transmit data, the RX UEA is interfered by the TX UEC. Therefore, the TX UEC is a hidden node for the TX UEB.

FIG. 4 is a schematic diagram showing exposed nodes according to the present disclosure.

In FIG. 4, it is assumed that there are two transmission pairs. That is, the user equipment TX UEB for transmission and the user equipment RX UEA for reception are a transmission pair. The user equipment TX UEC for transmission and the user equipment RX UED for reception are a transmission pair. The TX UEB is close to the TX UEC. The RX UEA is far away from the TX UEC. The RX UED is far away from the TX UEB. One of the TX UEB and the TX UEC successfully receives SCI transmitted by the other and correctly decodes the SCI. In addition, the RSRP of the reference signal from the TX UEC measured by the TX UEB exceeds a threshold, and thus the TX UEB can exclude the resources already reserved by the TX UEC. However, due to the long distance between the RX UEA and the TX UEC, the RX UEA cannot be affected by the transmission of the TX UEC. Therefore, the TX UEC is an exposed node for the TX UEB. Exposed nodes may cause the TX UEB to exclude too many resources that could have been available.

In the following, the selection of the finally available resource set by the transmitting electronic apparatus 100 from the resource pool is mainly described in conjunction with the scenario of sidelink resource selection mode 2. However, those skilled in the art should understand that the following description about the selection of the finally available resource set may be applied to other scenarios in which the transmitting electronic apparatus 100 selects the finally available resource set in 4G, 5G or other communication modes, rather than limited to the scenario of sidelink resource selection mode 2.

As an example, a distance between the transmitting electronic apparatus 100 and each of the at least one other transmitting electronic apparatus is smaller than a distance between the transmitting electronic apparatus 100 and the receiving electronic apparatus. In this way, the predetermined range is a circular area whose center is the transmitting electronic apparatus 100 and whose radius is the distance between the transmitting electronic apparatus 100 and the receiving electronic apparatus. Therefore, other transmitting electronic apparatuses that are exposed nodes of the transmitting electronic apparatus 100 are included in the circular area as much as possible.

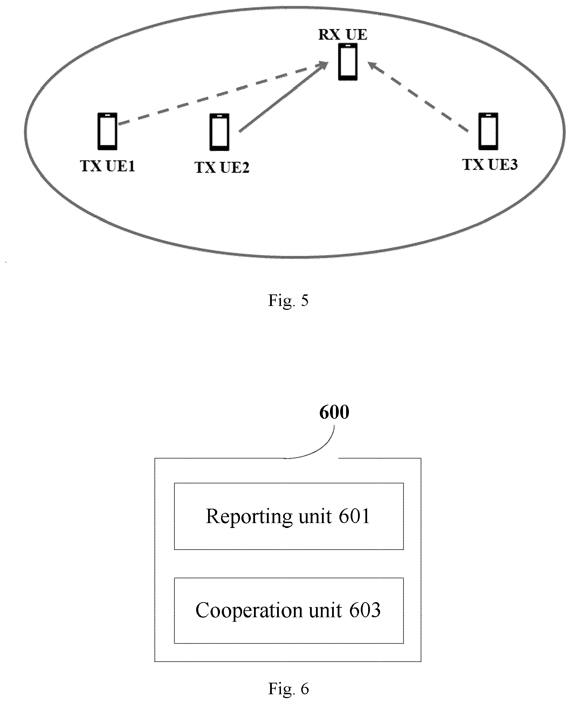

FIG. 5 is a schematic diagram illustrating an example of a communication scenario of the transmitting electronic apparatus 100 according to an embodiment of the present disclosure. In FIG. 5, the transmitting electronic apparatus 100 is represented as TX UE2. RX LTE denotes a receiving electronic apparatus communicating with the TX LTE2. Both TX LTE1 and TX UE3 represent electronic apparatuses for transmission. The distance between the TX UE2 and the TX UE1 is smaller than the distance between the TX UE2 and the RX UE, and the TX LTE1 is an example of the other transmitting electronic apparatus. It can be seen from FIG. 4 that the TX UE1 is an exposed node for the TX UE2. It should be noted that, only one other transmitting electronic apparatus TX UE1 is shown in FIG. 5 for simplicity. Those skilled in the art should understand that there may be multiple other transmitting electronic apparatuses. The distance between the TX UE2 and the TX UE3 is greater than the distance between the TX UE2 and the RX UE. The TX UE3 is therefore not the other transmitting electronic apparatus mentioned above. It can be seen from FIG. 3 that the TX UE3 is a hidden node for the TX UE2.

For example, it is assumed that the resource pool includes time-frequency resources (hereinafter sometimes simply referred to as resources) {R1, R2, R3, R4, R5, R6, R7, R8, R9}. In conjunction with FIG. 2, it is assumed that the reserved resources indicated in the SCI of the TX UE1 (that is, a part of the candidate resource set selected by the TX UE1 through the sidelink resource selection mode 2 described in conjunction with FIG. 2, and may also be referred to as a part of the candidate resource set corresponding to the TX UE1, hereinafter referred to as the candidate resource set corresponding to the TX UE1) are {R1, R4, R5}, the candidate resource set selected by the TX UE2 through the sidelink resource selection mode 2 described in FIG. 2 (that is, the candidate resource set corresponding to the TX UE2) is {R2, R3, R8}, the reserved resources indicated in the SCI of the TX UE3 (that is, a part of the candidate resource set selected by TX UE3 through the sidelink resource selection mode 2 described in FIG. 2, and also be referred to as a part of the candidate resource set corresponding to the TX UE3, hereinafter referred to as the candidate resource set corresponding to the TX LTE3) are {R2, R6, R7}, and candidate resource set corresponding to the RX UE is {R1, R8, R9}. The TX UE2 receives information about the candidate resource set {R1, R8, R9} corresponding to the RX LTE as assistance information.

As shown in FIG. 5, the distance between the TX LTE2 and the TX LTE1 is short, and the distance between RX UE and TX UE1 is long. Therefore, one of the TX UE2 and the TX UE1 can successfully receive the SCI transmitted by the other and correctly decode the received SCI. The RX UE is not affected by the transmission by the TX UE1. With reference to the example in FIG. 5, the resource R1 is included in the candidate resource set corresponding to the TX UE1 (that is, the SCI of the TX UE1 indicates that the resource R1 is reserved). The R1 is available to RX UEs since the RX LTE is not affected by the transmission by the TX UE1. However, when selecting resources in the existing resource selection mode described in FIG. 2, since the RSRP of the reference signal from the TX UE1 measured by the TX UE2 exceeds the threshold, the TX UE2 excludes the resource R1 reserved by the TX UE1 (i.e., the R1 is not included in the candidate resource set corresponding to the TX UE2). Therefore, the exposed node TX UE1 may cause TX UE2 to exclude too many resources (e.g., R1) that would otherwise be available.

As an example, in the transmitting electronic apparatus 100 according to an embodiment of the present disclosure, the selection unit 105 may be configured to: for each of at least part of the at least one other transmitting electronic apparatus, add an intersection of the candidate resource set corresponding to each other transmitting electronic apparatus and the candidate resource set corresponding to the receiving electronic apparatus to a first set, and determine the first set as at least a part of the finally available resource set.

As an example, the first set is initially an empty set.

According to the embodiment of the present disclosure, in combination with the example shown in FIG. 5, the intersection {R1} of the candidate resource set {R1, R4, R5} corresponding to the other transmitting electronic apparatus TX UE1 and the candidate resource set {R1, R8, R9} corresponding to the RX UE is added to the first set. Further, the first set {R1} is determined as at least a part of the finally available resource set, for the TX UE2 to transmit data to the RX UE, thereby reducing the influence of the exposed node TX UE 1.

It can be known from the above description that with the transmitting electronic apparatus 100 according to the embodiment of the present disclosure, the influence of exposed nodes is reduced, avoiding excessive exclusion of originally available resources, thereby further improving resource utilization efficiency.

With reference to the example shown in FIG. 5, the candidate resource set corresponding to the TX UE3 includes the R2, that is, the R2 is a resource reserved by the TX UE3. However, due to the long distance between the TX UE3 and the TX UE2, the TX UE2 fails to correctly exclude this resource. Therefore, the candidate resource set corresponding to the TX UE2 also includes the R2. In a cased that both the TX UE2 and the TX UE3 adopts the R2 to transmit data, resource collision maybe caused, thereby reducing the reliability of data transmission.

However, because the TX UE3 is close to the RX UE, the RX UE can correctly exclude the resource R2. Therefore, the resource R2 is not included in the candidate resource set {R1, R8, R9} corresponding to the RX UE.

As an example, the selection unit 105 may be configured to: determine an intersection of the candidate resource set corresponding to the transmitting electronic apparatus 100 and the candidate resource set corresponding to the receiving electronic apparatus as a second set, and determine at least a part of an union of the first set and the second set as the finally available resource set.

As an example, the second intersection set is initially an empty set.

According to the embodiment of the present disclosure, referring to the example shown in FIG. 5, an intersection {R8} of the candidate resource set {R2, R3, R8} corresponding to the TX LTE2 and the candidate resource set {R1, R8, R9} corresponding to the RX UE is determined as the second set. In this way, the TX UE2 can successfully exclude the resource R2, thereby reducing the influence of the hidden node TX UE3. In addition, since the resource R8 is available to both the TX LTE2 and the RX UE, the R8 is selected as one of the finally available resources of the TX UE2, so that the available resources can be correctly selected.

Referring to the example shown in FIG. 5, the union of the first set and the second set is {R1, R8}. At least a part of the union serves as the finally available resources.

It can be known from the above description that, in addition to reducing the influence of exposed nodes, the transmitting electronic apparatus 100 according to the embodiment of the present disclosure can also reduce the influence of hidden nodes, thereby further reducing the probability of resource collision and improving the reliability of data transmission performed by the transmitting electronic apparatus 100.

As an example, the selection unit 105 may be configured to determine the candidate resource set corresponding to the transmitting electronic apparatus 100 as the finally available resource set in a case that the finally available resource set is empty.

As an example, the communication unit 103 may be configured to request the receiving electronic apparatus to report assistance information in an event-triggered mode. For example, when a data packet arrives at the TX LTE2, the TX LTE2 requests the RX LTE to report the assistance information if the TX UE2 needs the RX UE to report the assistance information.

As an example, the communication unit 103 may be configured to transmit the request through an assistance request field included in the control information for data transmission. The assistance request field includes information about the request.

As an example, the control information including the assistance request field is the sidelink control information SCI. The SCI is the first-stage SCI as control information transmitted on a control channel.

For example, the TX LTE2 adds an assistance request field (that is, a field for requesting the assistance information) to the control information. For example, in the first-stage SCI, a 2-bit field may be added as the assistance request field. The assistance request field includes information on the request (for example, "01") indicating that the TX UE2 requests the assistance information from the RX UE.

As an example, the communication unit 103 may be configured to receive assistance information from the receiving electronic apparatus based on an assistance request field in the control information received from the receiving electronic apparatus.

For example, after preparing the assistance information, the RX UE notifies the TX UE2 that the information transmitted this time is the assistance information required by the TX UE2 based on the different formats (for example, "10" different from "01") of the assistance request field in the control information, so that the TX UE2 receives the assistance information from the RX UE.

In addition, for example, other formats (such as 00 or 11) of the assistance request field in the control information of the TX UE2 may indicate that the TX UE2 does not need assistance information.

There are some reserved bits in the existing first-stage SCI. Therefore, the first-stage SCI after adding the assistance request field according to the embodiment of the present disclosure may be compatible with the existing first-stage SCI.

As an example, the determining unit 101 may be configured to determine at least one first positional relationship and a second positional relationship based on control information for data transmission received from at least one other transmitting electronic apparatus and the receiving electronic apparatus. The control information includes information about the physical position of the electronic apparatus transmitting the control information.

For example, for user equipment UE (for example, the transmitting electronic apparatus 100, the other transmitting electronic apparatus, and the receiving electronic apparatus), Section 5.8.11 of the 5G series protocol TS 38.331 provides the calculation steps of ZoneId. Two variables x and y indicate the physical position of the UE. x is a longitude geodesic distance between a current position of the LTE and a geographic coordinate origin (0, 0), in meters. y is a geodesic distance from the current position of the LTE to the geographic coordinate origin (0, 0), in meters.

For example, the control information received by the transmitting electronic apparatus 100 from the other transmitting electronic apparatus includes information about the physical position of the other transmitting electronic apparatus. The control information received by the transmitting electronic apparatus 100 from the receiving electronic apparatus includes information about the physical position of the receiving electronic apparatus. For example, the distance between the transmitting electronic apparatus 100 and other transmitting electronic apparatus is calculated based on the information on the physical position of the transmitting electronic apparatus 100 and the information on the physical positions of other transmitting electronic apparatus, thereby determining the first positional relationship. The distance between the transmitting electronic apparatus 100 and the receiving electronic apparatus is calculated based on the information on the physical position of the transmitting electronic apparatus 100 and the information on the physical position of the receiving electronic apparatus, thereby determining the second positional relationship.

As an example, the control information including the information on the physical position is the sidelink control information SCI. The SCI is a first-stage SCI as control information transmitted on a control channel or a second-stage SCI as control information transmitted on a data channel. That is, based on the signaling of the physical layer, a field including the information on the physical position is added to the first-stage SCI or the second-stage SCI.

As an example, the determining unit 101 may be configured to determine, based on reference signal strengths of reference signals received from at least one other transmitting electronic apparatus and the receiving electronic apparatus, the distance between the transmitting electronic apparatus 100 and each of the at least one other transmitting electronic apparatus and the distance between the transmitting electronic apparatus 100 and the receiving electronic apparatus, so as to determine at least one of a first positional relationship and a second positional relationship. Since passing through a wall or the like may result in great attenuation of the signal, this determination is applicable to scenarios where the communication environments of the other transmitting electronic apparatus and the receiving electronic apparatus are consistent or the communication environments are relatively open. Since no additional signaling overhead is needed, the determination performs well in terms of energy saving and resource saving.

For example, the transmitting electronic apparatus 100 may determine the first positional relationship and the second positional relationship by selecting an appropriate method from the above methods according to communication scenarios, QoS indicators, or capabilities of the transmitting electronic apparatus 100.

There is also provided a receiving electronic apparatus for wireless communication according to the present disclosure. FIG. 6 is a block diagram showing functional modules of a receiving electronic apparatus 600 for wireless communications according to an embodiment of the present disclosure. The receiving electronic apparatus 600 is configured to receive data from a transmitting electronic apparatus in communication with the receiving electronic apparatus 600. As shown in FIG. 6, the receiving electronic apparatus 600 includes: a reporting unit 601 and a cooperation unit 603. The reporting unit 601 is configured to report information about a candidate resource set corresponding to the receiving electronic apparatus 600 as assistance information to the transmitting electronic apparatus. The candidate resource set is formed by time-frequency resource blocks used by the receiving electronic apparatus for receiving the data. The cooperation unit 603 is configured to transmit positional relationship information about a positional relationship between the receiving electronic apparatus 600 and the transmitting electronic apparatus to the transmitting electronic apparatus to cooperate with the transmitting electronic apparatus to select at least one time-frequency resource block for transmitting the data from a resource pool based on the assistance information and the positional relationship information.

The reporting unit 601 and the cooperation unit 603 may be implemented by one or more processing circuitries which may be implemented as, for example, a chip.

The receiving electronic apparatus 600 may be arranged on user equipment (UE) side or communicably connected to a UE, for example. It should also be noted herein that, the receiving electronic apparatus 600 may be implemented at chip level or at device level. For example, the receiving electronic apparatus 600 may work as user equipment itself, and may also include external devices such as a memory, a transceiver (not shown in the figure) and the like. The memory may be used to store programs and related data information that the user equipment needs to execute in order to implement various functions. The transceiver may include one or more communication interfaces to support communication with different devices (e.g., a base station, other user equipment, etc.), and the implementation form of the transceiver is not specifically limited here. The base station may be, for example, an eNB or a gNB.

As an example, the receiving electronic apparatus 600 performs unicast communication with the transmitting electronic apparatus.

As an example, the transmitting electronic apparatus may be the transmitting electronic apparatus 100 described above.

As an example, the resource pool may be composed of predetermined time-frequency resource blocks. As an example, in addition to the predetermined time-frequency resource blocks, the resource pool may also include one or more time-frequency resource blocks in an abnormal resource pool. The candidate resource set corresponding to the receiving electronic apparatus 600 is at least a part of the resource pool.

Hereinafter, the set formed by the time-frequency resource blocks for the transmitting electronic apparatus to transmit data is referred to as a candidate resource set corresponding to the transmitting electronic apparatus. The candidate resource set corresponding to the transmitting electronic apparatus is at least a part of the resource pool.

As an example, the candidate resource set corresponding to the receiving electronic apparatus 600 and the candidate resource set corresponding to the transmitting electronic apparatus may be selected according to the conventional technology. For example, in the 5G NR sidelink communication, the receiving electronic apparatus 600 and the transmitting electronic apparatus may adopt resource selection mode 2 (mode 2) to select corresponding candidate resource sets respectively.

In the conventional technology, the candidate resource set corresponding to the receiving electronic apparatus, the first positional relationship and the second positional relationship are not considered in the selection of the time-frequency resource block for the transmitting electronic apparatus to transmit data to the receiving electronic apparatus. For example, in the resource selection mode 2 according to the conventional technology, the candidate resource set corresponding to the transmitting electronic apparatus is directly determined as the finally available resource set, without considering the candidate resource set corresponding to the receiving electronic apparatus, the first positional relationship and the second positional relationship, resulting in a high probability of resource collision, thereby reducing the reliability of data transmission performed by the transmitting electronic apparatus, and/or excessively excluding resources that are originally available to the transmitting electronic apparatus, thereby reducing resource utilization efficiency.

Instead, the receiving electronic apparatus 600 according to the embodiment of the present disclosure cooperates with the transmitting electronic apparatus to select a time-frequency resource block for transmitting data from the resource pool based on the assistance information and the positional relationship information, so as to cooperate with the transmitting electronic apparatus to correctly select the available time-frequency resources. Therefore, the probability of resource collision is reduced, thereby improving the reliability of data transmission, and the resource utilization efficiency is improved by avoiding excessive exclusion of originally available resources.

As an example, the cooperation unit 603 is configured to cooperate with the transmitting electronic apparatus to select a time-frequency resource block in a scenario of sidelink resource selection mode 2. However, those skilled in the art should understand that the following description about cooperating with the transmitting electronic apparatus to select the time-frequency resource block may be applied to other scenarios where the receiving electronic apparatus 600 cooperates with the transmitting electronic apparatus to select time-frequency resource blocks in 4G, 5G or other communication modes, rather than limited to the scenario of sidelink resource selection mode 2.

As an example, the reporting unit 601 is configured to report assistance information in response to a request transmitted by the transmitting electronic apparatus in an event-triggered mode. For a description about the transmitting electronic apparatus transmitting a request in the event-triggered mode, reference is made to the corresponding part of the description about the communication unit 103 in the embodiment of the transmitting electronic apparatus 100, and thus is not described in detail here.

As an example, the reporting unit 601 is configured to report assistance information based on an assistance request field included in control information for data transmission. The assistance request field includes information about the request.

As an example, the control information including the assistance request field is sidelink control information SCI. The SCI is a first-stage SCI as control information transmitted on a control channel.

The description of the control information including the assistance request field may refer to the description of the corresponding part of the communication unit 103 in the embodiment of the transmitting electronic apparatus 100, and thus is not discussed in detail here.

As an example, the reporting unit 601 is configured to determine a part of the time-frequency resource blocks in the candidate resource set corresponding to the receiving electronic apparatus 600 as a physical sidelink shared channel PSSCH to transmit the assistance information. That is, information about the candidate resource set corresponding to the receiving electronic apparatus 600 (assistance information) is transmitted on the PSSCH composed of some time-frequency resource blocks in the above candidate resource set.

As an example, the coordination unit 603 is configured to include information on the physical position of the receiving electronic apparatus 600 in the control information for data transmission as the positional relationship information.

For the description of the information about the physical position of the receiving electronic apparatus 600, reference is made to the description of the corresponding part of the determining unit 101 in the embodiment of the transmitting electronic apparatus 100, and thus is not discussed in detail here.

For example, the transmitting electronic apparatus determines the positional relationship between the transmitting electronic apparatus and the receiving electronic apparatus 600 based on the information on the physical position of the transmitting electronic apparatus and the information on the physical position of the receiving electronic apparatus 600.

As an example, the control information including the information on the physical position is the sidelink control information SCI. The SCI is a first-stage SCI as control information transmitted on a control channel or a second-stage SCI as control information transmitted on a data channel.

As an example, the coordination unit 603 is configured to transmit information about the physical position of the receiving electronic apparatus through the RRC signaling, as the positional relationship information.

As an example, the cooperation unit 603 is configured to transmit a reference signal to the transmitting electronic apparatus, so that the transmitting electronic apparatus determines the measured strength of the reference signal as the positional relationship information. For example, the transmitting electronic apparatus receives a reference signal from the receiving electronic apparatus 600, and determines the distance between the transmitting electronic apparatus and the receiving electronic apparatus 600 based on the measured strength of the reference signal, so as to determine the positional relationship.

In the process of describing the electronic apparatuses for wireless communications in the above implementations, some processing or methods obviously have also been disclosed. Hereinafter, an outline of these methods will be given without repeating some of the details that have been discussed above. However, it should be noted that, although these methods are disclosed in the process of describing electronic apparatuses for wireless communications, these methods do not necessarily employ those components as described or are not necessarily executed by those components. For example, the implementations of the electronic apparatuses for wireless communications may be partially or completely realized using hardware and/or firmware, while the methods for wireless communications discussed below may be completely implemented by a computer-executable program, although these methods may also employ hardware and/or firmware of the electronic apparatuses for wireless communications.

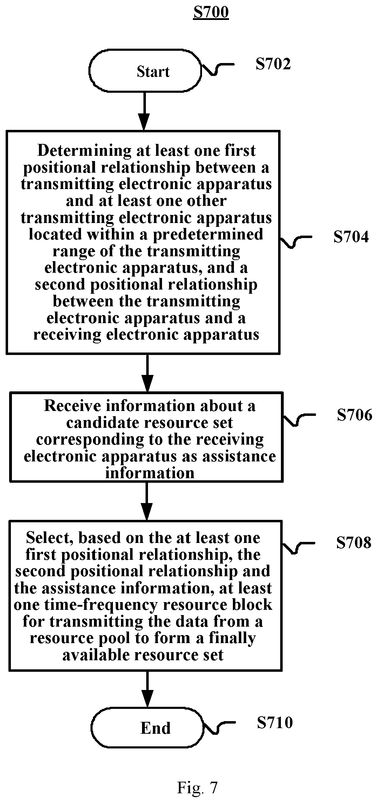

FIG. 7 is a flowchart showing a method S700 for wireless communications according to an embodiment of the present disclosure. The method S700 is performed by the transmitting electronic apparatus that transmits data to the receiving electronic apparatus that communicates with the transmitting electronic apparatus. The method S700 starts at step S702. In step S704, at least one first positional relationship between the transmitting electronic apparatus and at least one other transmitting electronic apparatus within a predetermined range of the transmitting electronic apparatus and a second positional relationship between the transmitting electronic apparatus and the receiving electronic apparatus are determined. In step S706, information about a candidate resource set corresponding to the receiving electronic apparatus is received as assistance information. The candidate resource set is composed of time-frequency resource blocks that the receiving electronic apparatus uses to receive data. In step S708, at least one time-frequency resource block for transmitting data is selected from the resource pool based on the at least one first positional relationship, the second positional relationship, and the assistance information, to form a finally available resource set. The method S700 ends in step S710.

The method may be performed by, for example, the transmitting electronic apparatus 100 described above, and details may refer to the above description at the corresponding position, and thus are not described here.

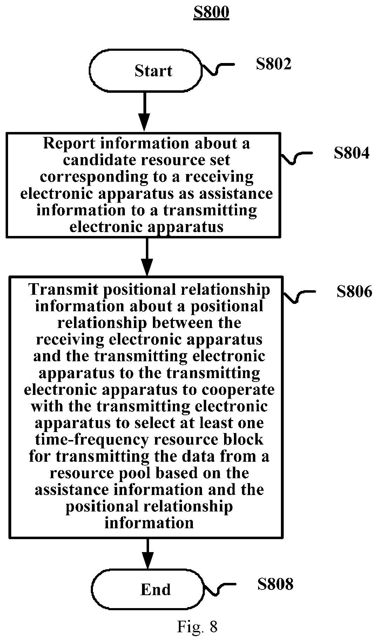

FIG. 8 is a flowchart showing a method S800 for wireless communications according to another embodiment of the present disclosure. The method S800 is performed by a receiving electronic apparatus that receives data from a transmitting electronic apparatus that communicates with the receiving electronic apparatus. The method S800 starts at step S802. In step S804, the information about the candidate resource set corresponding to the receiving electronic apparatus is reported to the transmitting electronic apparatus as assistance information. The candidate resource set is composed of time-frequency resource blocks for the receiving electronic apparatus to receive data. In step S806, the positional relationship information related to the positional relationship between the receiving electronic apparatus and the transmitting electronic apparatus is transmitted to the transmitting electronic apparatus, so as to cooperate with the transmitting electronic apparatus to select at least one time-frequency resource block for transmitting data from the resource pool based on the assistance information and the positional relationship information. The method S800 ends in step S808.

The method may be performed, for example, by the receiving electronic apparatus 600 described above, and details may refer to the description at the corresponding position above, and thus are not described here.

The technology of the present disclosure can be applied to various products.

For example, the transmitting electronic apparatus 100 and the receiving electronic apparatus 600 may be implemented as various user equipment. The user equipment may be implemented as a mobile terminal (such as a smart phone, a tablet personal computer (PC), a notebook PC, a portable game terminal, a portable/dongle type mobile router, and a digital camera), or a vehicle terminal (such as an automobile navigation equipment). The user equipment may also be implemented as a terminal performing machine-to-machine (M2M) communication (also referred to as a machine type communication (MTC) terminal). In addition, the user equipment may be a wireless communication module (such as an integrated circuit module including a single chip) mounted on each of the terminals.

### [Application Examples About Base Station]

### (First Application Example)

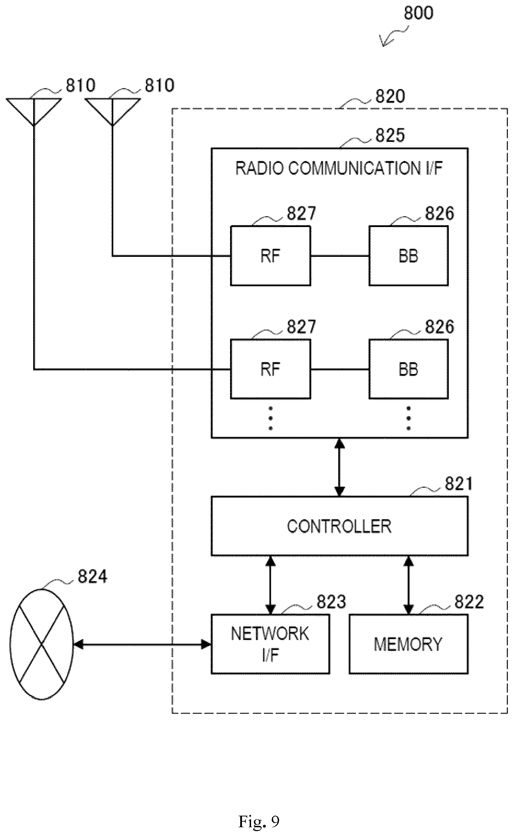

FIG. 9 is a block diagram showing a first example of a schematic configuration of an eNB or gNB to which the technology of the present disclosure can be applied. Note that, the following description takes an eNB as an example, but it may also be applied to a gNB. An eNB 800 includes one or more antennas 810 and base station equipment 820. The base station equipment 820 and each antenna 810 may be connected to each other via an RF cable.

Each of the antennas 810 includes a single or multiple antenna elements (such as multiple antenna elements included in a Multi-Input Multi-Output (MIMO) antenna), and is used for the base station equipment 820 to transmit and receive wireless signals. As shown in FIG. 9, the eNB 800 may include multiple antennas 810. For example, the multiple antennas 810 may be compatible with multiple frequency bands used by the eNB 800. Although FIG. 9 shows an example in which the eNB 800 includes multiple antennas 810, the eNB 800 may also include a single antenna 810.

The base station equipment 820 includes a controller 821, a memory 822, a network interface (I/F) 823, and a radio communication interface 825.

The controller 821 may be, for example, a CPU or a DSP, and manipulate various functions of a higher layer of the base station equipment 820. For example, the controller 821 generates a data packet based on data in a signal processed by the radio communication interface 825, and transfers the generated packet via the network interface 823. The controller 821 may bundle data from multiple baseband processors to generate a bundled packet, and transfer the generated bundled packet. The controller 821 may have a logical function for performing control such as radio resource control, radio bearer control, mobility management, admission control, and scheduling. The control may be executed in conjunction with nearby eNBs or core network nodes. The memory 822 includes an RAM and an ROM, and stores programs executed by the controller 821 and various types of control data (such as a terminal list, transmission power data, and scheduling data).

The network interface 823 is a communication interface for connecting the base station equipment 820 to a core network 824. The controller 821 may communicate with the core network node or another eNB via the network interface 823. In this case, the eNB 800 and the core network node or other eNBs may be connected to each other through a logical interface (such as an S1 interface and an X2 interface). The network interface 823 may also be a wired communication interface, or a wireless communication interface for a wireless backhaul line. If the network interface 823 is a wireless communication interface, the network interface 823 may use a higher frequency band for wireless communications than the frequency band used by the radio communication interface 825.

The radio communication interface 825 supports any cellular communication scheme (such as Long Term Evolution (LTE) and LTE-Advanced), and provides wireless connection to a terminal located in a cell of the eNB 800 via an antenna 810. The radio communication interface 825 may generally include, for example, a baseband (BB) processor 826 and an RF circuit 827. The BB processor 826 may execute, for example, encoding/decoding, modulation/demodulation, and multiplexing/demultiplexing, and execute various types of signal processing of layers (e.g., L1, Medium Access Control (MAC), Radio Link Control (RLC), and Packet Data Convergence Protocol (PDCP)). Instead of the controller 821, the BB processor 826 may have a part or all of the above-mentioned logical functions. The BB processor 826 may be a memory storing a communication control program, or a module including a processor and related circuits configured to execute the program. An update program may cause the function of the BB processor 826 to be changed. The module may be a card or blade inserted into a slot of the base station equipment 820. Alternatively, the module may also be a chip mounted on a card or blade. Meanwhile, the RF circuit 827 may include, for example, a mixer, a filter, and an amplifier, and transmit and receive a wireless signal via the antenna 810.

As shown in FIG. 9, the radio communication interface 825 may include multiple BB processors 826. For example, the multiple BB processors 826 may be compatible with multiple frequency bands used by the eNB 800. As shown in FIG. 9, the radio communication interface 825 may include multiple RF circuits 827. For example, the multiple RF circuits 827 may be compatible with multiple antenna elements. Although FIG. 9 shows an example in which the radio communication interface 825 includes multiple BB processors 826 and multiple RF circuits 827, the radio communication interface 825 may also include a single BB processor 826 or a single RF circuit 827.

In the eNB 800 as shown in FIG. 9, the transceiver of the electronic apparatus 200 may be implemented by a radio communication interface 825. At least a part of the function may also be implemented by the controller 821.

### (Second Application Example)

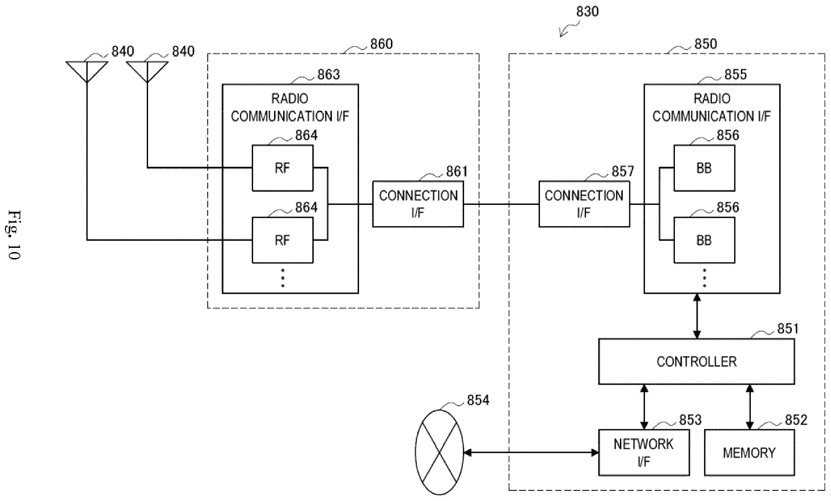

FIG. 10 is a block diagram showing a second example of a schematic configuration of an eNB or gNB to which the technology of the present disclosure can be applied. Note that similarly, the following description takes an eNB as an example, but it may also be applied to a gNB. An eNB 830 includes one or more antennas 840, base station equipment 850, and an RRH 860. The RRH 860 and each antenna 840 may be connected to each other via an RF cable. The base station equipment 850 and the RRH 860 may be connected to each other via a high-speed line such as an optical fiber cable.

Each of the antennas 840 includes a single or multiple antenna elements (such as multiple antenna elements included in a MIMO antenna) and is used for the RRH 860 to transmit and receive a wireless signal. As shown in FIG. 10, the eNB 830 may include multiple antennas 840. For example, the multiple antennas 840 may be compatible with multiple frequency bands used by the eNB 830. Although FIG. 10 shows an example in which the eNB 830 includes multiple antennas 840, the eNB 830 may also include a single antenna 840.

The base station equipment 850 includes a controller 851, a memory 852, a network interface 853, a radio communication interface 855, and a connection interface 857. The controller 851, the memory 852, and the network interface 853 are the same as the controller 821, the memory 822, and the network interface 823 as described with reference to FIG. 9.

The radio communication interface 855 supports any cellular communication scheme (such as LTE and LTE-Advanced), and provides wireless communications to a terminal located in a sector corresponding to the RRH 860 via the RRH 860 and the antenna 840. The radio communication interface 855 may generally include, for example, a BB processor 856. The BB processor 856 is the same as the BB processor 826 as described with reference to FIG. 9 except that the BB processor 856 is connected to the RF circuit 864 of the RRH 860 via the connection interface 857. As shown in FIG. 10, the radio communication interface 855 may include multiple BB processors 856. For example, the multiple BB processors 856 may be compatible with multiple frequency bands used by the eNB 830. Although FIG. 10 shows an example in which the radio communication interface 855 includes multiple BB processors 856, the radio communication interface 855 may also include a single BB processor 856.

The connection interface 857 is an interface for connecting the base station equipment 850 (radio communication interface 855) to the RRH 860. The connection interface 857 may also be a communication module for communication in the above-mentioned high-speed line that connects the RRH 860 to the base station equipment 850 (radio communication interface 855).

The RRH 860 includes a connection interface 861 and a radio communication interface 863.

The connection interface 861 is an interface for connecting the RRH 860 (radio communication interface 863) to the base station equipment 850. The connection interface 861 may also be a communication module for communication in the above-mentioned high-speed line.

The radio communication interface 863 transfers and receives wireless signals via the antenna 840. The radio communication interface 863 may generally include, for example, an RF circuit 864. The RF circuit 864 may include, for example, a mixer, a filter, and an amplifier, and transfer and receive wireless signals via the antenna 840. As shown in FIG. 10, the radio communication interface 863 may include multiple RF circuits 864. For example, the multiple RF circuits 864 may support multiple antenna elements. Although FIG. 10 shows an example in which the radio communication interface 863 includes multiple RF circuits 864, the radio communication interface 863 may also include a single RF circuit 864.

In the eNB 830 as shown in FIG. 10, the transceiver of the electronic apparatus 200 may be implemented by the radio communication interface 825. At least a part of the function may also be implemented by the controller 821.

### [Application Example About User Equipment]

### (First Application Example)

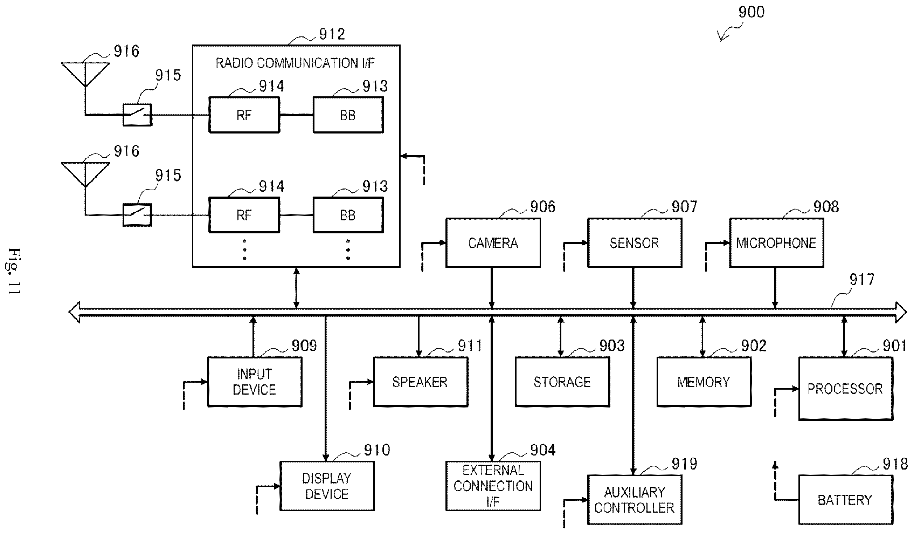

FIG. 11 is a block diagram showing an example of a schematic configuration of a smart phone 900 to which the technology of the present disclosure can be applied. The smart phone 900 includes a processor 901, a memory 902, a storage 903, an external connection interface 904, an camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls the functions of the application layer and other layers of the smart phone 900. The memory 902 includes an RAM and an ROM, and stores data and programs executed by the processor 901. The storage 903 may include a storage medium such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetic sensor, and an acceleration sensor. The microphone 908 converts sound input to the smart phone 900 into an audio signal. The input device 909 includes, for example, a touch sensor, a keypad, a keyboard, a button, or a switch configured to detect a touch on a screen of the display device 910, and receives an operation or information input from the user. The display device 910 includes a screen (such as a liquid crystal display (LCD) and an organic light emitting diode (OLED) display), and displays an output image of the smart phone 900. The speaker 911 converts the audio signal output from the smart phone 900 into sound.

The radio communication interface 912 supports any cellular communication scheme (such as LTE and LTE-Advanced), and executes wireless communications. The radio communication interface 912 may generally include, for example, a BB processor 913 and an RF circuit 914. The BB processor 913 may execute, for example, encoding/decoding, modulation/demodulation, and multiplexing/demultiplexing, and execute various types of signal processing for wireless communications. Meanwhile, the RF circuit 914 may include, for example, a mixer, a filter, and an amplifier, and transmit and receive wireless signals via the antenna 916. Note that, although the figure shows a circumstance where one RF link is connected with one antenna, this is only schematic, and a circumstance where one RF link is connected with multiple antennas through multiple phase shifters is also included. The radio communication interface 912 may be a chip module on which the BB processor 913 and the RF circuit 914 are integrated. As shown in FIG. 11, the radio communication interface 912 may include multiple BB processors 913 and multiple RF circuits 914. Although FIG. 11 shows an example in which the radio communication interface 912 includes multiple BB processors 913 and multiple RF circuits 914, the radio communication interface 912 may also include a single BB processor 913 or a single RF circuit 914.

Furthermore, in addition to the cellular communication scheme, the radio communication interface 912 may support other types of wireless communication schemes, such as a short-range wireless communication scheme, a near field communication scheme, and a wireless local area network (LAN) scheme. In this case, the radio communication interface 912 may include a BB processor 913 and an RF circuit 914 for each wireless communication scheme.

Each of the antenna switches 915 switches a connection destination of the antenna 916 among multiple circuits included in the radio communication interface 912 (e.g., circuits for different wireless communication schemes).

Each of the antennas 916 includes a single or multiple antenna elements (such as multiple antenna elements included in a MIMO antenna), and is used for the radio communication interface 912 to transmit and receive wireless signals. As shown in FIG. 11, the smart phone 900 may include multiple antennas 916. Although FIG. 11 shows an example in which the smart phone 900 includes multiple antennas 916, the smart phone 900 may also include a single antenna 916.

Furthermore, the smart phone 900 may include an antenna 916 for each wireless communication scheme. In this case, the antenna switch 915 may be omitted from the configuration of the smart phone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to each block of the smart phone 900 as shown in FIG. 11 via a feeder line, which is partially shown as a dashed line in the figure. The auxiliary controller 919 manipulates the least necessary function of the smart phone 900 in a sleep mode, for example.

In the smart phone 900 as shown in FIG. 11, in a case that the transmitting electronic apparatus 100 described with reference to FIG. 1 and the receiving electronic apparatus 600 described with reference to FIG. 6 each are implemented as user equipment, transceivers of the transmitting electronic apparatus 100 and the receiving electronic apparatus 600 may be implemented by the radio communication interface 912. At least a part of the function may also be implemented by the processor 901 or the auxiliary controller 919. For example, the processor 901 or the auxiliary controller 919 may enable the transmitting electronic apparatus 100 to correctly select available time-frequency resource blocks by implementing the functions of the units described above with reference to FIG. 1, or implement the functions of the units described above with reference to FIG. 6 to cooperate with the transmitting electronic apparatus to correctly select an available time-frequency resource block.

### (Second Application Example)

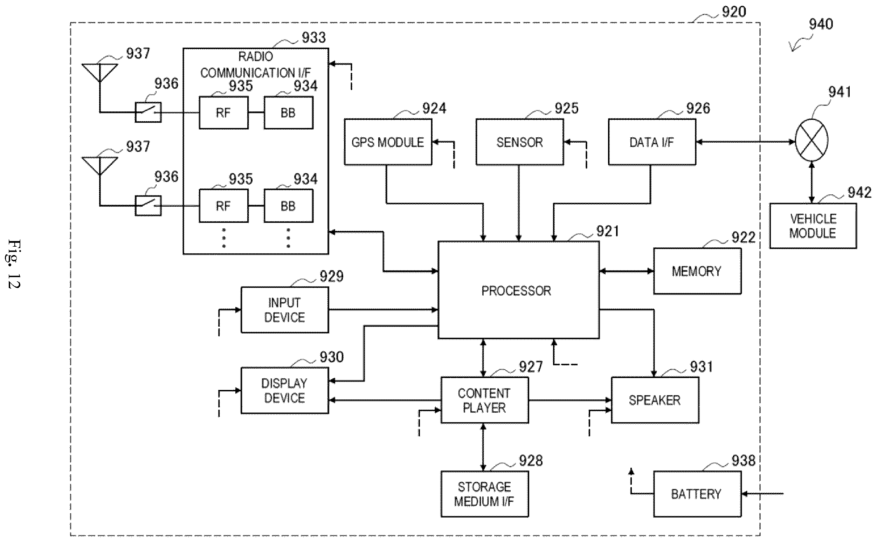

FIG. 12 is a block diagram showing an example of a schematic configuration of automobile navigation equipment 920 to which the technology of the present disclosure can be applied. The automobile navigation equipment 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or a SoC, and controls the navigation function of the automobile navigation equipment 920 and additional functions. The memory 922 includes a RAM and an ROM, and stores data and programs executed by the processor 921.

The GPS module 924 uses a GPS signal received from a GPS satellite to measure a position of the automobile navigation equipment 920 (such as latitude, longitude, and altitude). The sensor 925 may include a group of sensors, such as a gyro sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 reproduces content stored in a storage medium (such as a CD and a DVD), which is inserted into the storage medium interface 928. The input device 929 includes, for example, a touch sensor, a button, or a switch configured to detect a touch on a screen of the display device 930, and receives an operation or information input from the user. The display device 930 includes a screen such as an LCD or OLED display, and displays an image of a navigation function or reproduced content. The speaker 931 outputs the sound of the navigation function or the reproduced content.

The radio communication interface 933 supports any cellular communication scheme, such as LTE and LTE-Advanced, and executes wireless communication. The radio communication interface 933 may generally include, for example, a BB processor 934 and an RF circuit 935. The BB processor 934 may execute, for example, encoding/decoding, modulation/demodulation, and multiplexing/demultiplexing, and execute various types of signal processing for wireless communications. Meanwhile, the RF circuit 935 may include, for example, a mixer, a filter, and an amplifier, and transmit and receive wireless signals via the antenna 937. The radio communication interface 933 may also be a chip module on which the BB processor 934 and the RF circuit 935 are integrated. As shown in FIG. 12, the radio communication interface 933 may include multiple BB processors 934 and multiple RF circuits 935. Although FIG. 12 shows an example in which the radio communication interface 933 includes multiple BB processors 934 and multiple circuits 935, the radio communication interface 933 may also include a single BB processor 934 or a single RF circuit 935.

Furthermore, in addition to the cellular communication scheme, the radio communication interface 933 may support types of wireless communication schemes, such as a short-range wireless communication scheme, a near field communication scheme, and a wireless LAN scheme. In this case, the radio communication interface 933 may include a BB processor 934 and an RF circuit 935 for each wireless communication scheme.

Each of the antenna switches 936 switches a connection destination of the antenna 937 among multiple circuits included in the radio communication interface 933 (e.g., circuits for different wireless communication schemes).

Each of the antennas 937 includes a single or multiple antenna elements (such as multiple antenna elements included in a MIMO antenna), and is used for the radio communication interface 933 to transmit and receive wireless signals. As shown in FIG. 12, the automobile navigation equipment 920 may include multiple antennas 937. Although FIG. 12 shows an example in which the automobile navigation equipment 920 includes multiple antennas 937, the automobile navigation equipment 920 may also include a single antenna 937.

Furthermore, the automobile navigation equipment 920 may include an antenna 937 for each wireless communication scheme. In this case, the antenna switch 936 may be omitted from the configuration of the automobile navigation equipment 920.

The battery 938 supplies power to each block of the automobile navigation equipment 920 as shown in FIG. 12 via a feeder line, which is partially shown as a dashed line in the figure. The battery 938 accumulates electric power supplied from the vehicle.

In the automobile navigation equipment 920 as shown in FIG. 12, in a case that the transmitting electronic apparatus 100 described with reference to FIG. 1 and the receiving electronic apparatus 600 described with reference to FIG. 6 are implemented as user equipment, the transceivers of the transmitting electronic apparatus 100 and the receiving electronic apparatus 600 may be implemented by the radio communication interface 933. At least a part of the function may also be implemented by the processor 921. For example, the processor 921 may enable the transmitting electronic apparatus 100 to correctly select available time-frequency resource blocks by implementing the functions of the units described above with reference to FIG. 1, or implements the functions of the units described above with reference to FIG. 6 to cooperate with the transmitting electronic apparatus to correctly select the available time-frequency resource blocks.

The technology of the present disclosure may also be implemented as an in-vehicle system (or vehicle) 940 including one or more blocks in the automobile navigation equipment 920, the in-vehicle network 941, and the vehicle module 942. The vehicle module 942 generates vehicle data (such as vehicle speed, engine speed, and failure information), and outputs the generated data to the in-vehicle network 941.

The basic principle of the present invention has been described above in conjunction with specific embodiments. However, it should be pointed out that, for those skilled in the art, it could be understood that all or any step or component of the methods and devices of the present invention may be implemented in any computing device (including processors, storage media, etc.) or network of computing devices in the form of hardware, firmware, software, or a combination thereof. This can be achieved by those skilled in the art utilizing their basic circuit design knowledge or basic programming skills after reading the description of the present invention.

Moreover, the present invention also proposes a program product storing a machine-readable instruction code that, when read and executed by a machine, can execute the above-mentioned methods according to the embodiments of the present invention.

Accordingly, a storage medium for carrying the above-mentioned program product storing a machine-readable instruction code is also included in the disclosure of the present invention. The storage medium includes, but is not limited to, a floppy disk, an optical disk, a magneto-optical disk, a memory card, a memory stick, etc.

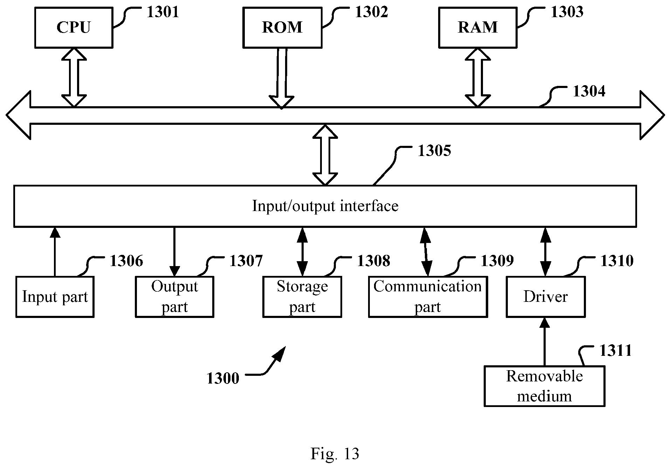

In a case where the present invention is implemented by software or firmware, a program constituting the software is installed from a storage medium or a network to a computer with a dedicated hardware structure (e.g., a general-purpose computer 1300 as shown in FIG. 13), and the computer, when installed with various programs, can execute various functions and the like.

In FIG. 13, a central processing unit (CPU) 1301 executes various processing in accordance with a program stored in a read only memory (ROM) 1302 or a program loaded from a storage part 1308 to a random access memory (RAM) 1303. In the RAM 1303, data required when the CPU 1301 executes various processing and the like is also stored as needed. The CPU 1301, the ROM 1302, and the RAM 1303 are connected to each other via a bus 1304. The input/output interface 1305 is also connected to the bus 1304.

The following components are connected to the input/output interface 1305: an input part 1306 (including a keyboard, a mouse, etc.), an output part 1307 (including a display, such as a cathode ray tube (CRT), a liquid crystal display (LCD), etc., and a speaker, etc.), a storage part 1308 (including a hard disk, etc.), and a communication part 1309 (including a network interface card such as an LAN card, a modem, etc.). The communication part 1309 executes communication processing via a network such as the Internet. The driver 1310 may also be connected to the input/output interface 1305, as needed. A removable medium 1311 such as a magnetic disk, an optical disk, a magneto-optical disk, a semiconductor memory and the like is installed on the driver 1310 as needed, so that a computer program read out therefrom is installed into the storage part 1308 as needed.

In a case where the above-mentioned series of processing is implemented by software, a program constituting the software is installed from a network such as the Internet or a storage medium such as the removable medium 1311.

Those skilled in the art should understand that, this storage medium is not limited to the removable medium 1311 as shown in FIG. 13 which has a program stored therein and which is distributed separately from an apparatus to provide the program to users. Examples of the removable media 1311 include magnetic disks (including a floppy disk (registered trademark)), an optical disk (including a compact disk read-only memory (CD-ROM) and a digital versatile disk (DVD)), a magneto-optical disk (including a mini disk (MD) (registered trademark)), and a semiconductor memory. Alternatively, the storage medium may be the ROM 1302, a hard disk included in the storage part 1308, etc., which have programs stored therein and which are distributed concurrently with the apparatus including them to users.

It should also be pointed out that in the devices, methods and systems of the present invention, each component or each step may be decomposed and/or recombined. These decompositions and/or recombinations should be regarded as equivalent solutions of the present invention. Moreover, the steps of executing the above-mentioned series of processing may naturally be executed in chronological order in the order as described, but do not necessarily need to be executed in chronological order. Some steps may be executed in parallel or independently of each other.

Finally, it should be noted that, the terms "include", "comprise" or any other variants thereof are intended to cover non-exclusive inclusion, so that a process, method, article or apparatus that includes a series of elements not only includes those elements, but also includes other elements that are not explicitly listed, or but also includes elements inherent to such a process, method, article, or apparatus. Furthermore, in the absence of more restrictions, an element defined by the sentence "including one..." does not exclude the existence of other identical elements in a process, method, article, or apparatus that includes the element.

Although the embodiments of the present invention have been described above in detail in conjunction with the accompanying drawings, it should be appreciated that, the above-described embodiments are only used to illustrate the present invention and do not constitute a limitation to the present invention. For those skilled in the art, various modifications and changes may be made to the above-mentioned embodiments without departing from the essence and scope of the present invention. Therefore, the scope of the present invention is defined only by the appended claims and equivalent meanings thereof.

### This technology can also be implemented as follows.

(1). A transmitting electronic apparatus for wireless communications, where the transmitting electronic apparatus is configured to transmit data to a receiving electronic apparatus in communication with the transmitting electronic apparatus, and the transmitting electronic apparatus includes:
   processing circuitry, configured to:
   determine at least one first positional relationship between the transmitting electronic apparatus and at least one other transmitting electronic apparatus located within a predetermined range of the transmitting electronic apparatus, and a second positional relationship between the transmitting electronic apparatus and the receiving electronic apparatus;
   receive information about a candidate resource set corresponding to the receiving electronic apparatus as assistance information, where the candidate resource set is formed by time-frequency resource blocks used by the receiving electronic apparatus for receiving the data; and
   select, based on the at least one first positional relationship, the second positional relationship and the assistance information, at least one time-frequency resource block for transmitting the data from a resource pool to form a finally available resource set.
(2). The transmitting electronic apparatus according to (1), where
   a distance between the transmitting electronic apparatus and each of the at least one other transmitting electronic apparatus is smaller than a distance between the transmitting electronic apparatus and the receiving electronic apparatus.
(3). The transmitting electronic apparatus according to (2), where the processing circuitry is configured to:
   for each of other transmitting electronic apparatuses in at least a part of the at least one other transmitting electronic apparatus, add an intersection of a candidate resource set corresponding to the each of other transmitting electronic apparatuses and the candidate resource set corresponding to the receiving electronic apparatus to a first set; and
   use the first set as at least a part of the finally available resource set.
(4). The transmitting electronic apparatus according to (3), where the processing circuitry is configured to:
   use an intersection of a candidate resource set corresponding to the transmitting electronic apparatus and the candidate resource set corresponding to the receiving electronic apparatus as a second set; and
   use at least a part of a union of the first set and the second set as the finally available resource set.
(5). The transmitting electronic apparatus according to any one of (1) to (4), where the processing circuitry is configured to request, in an event-triggered mode, the receiving electronic apparatus to report the assistance information.
(6). The transmitting electronic apparatus according to (5), where the processing circuitry is configured to transmit the request through an assistance request field included in control information for data transmission, where the assistance request field includes information about the request.
(7). The transmitting electronic apparatus according to (6), where the control information is sidelink control information (SCI), and the SCI is a first-stage SCI as control information transmitted on a control channel.
(8). The transmitting electronic apparatus according to (6) or (7), where the processing circuitry is configured to receive the assistance information from the receiving electronic apparatus based on the assistance request field in the control information received from the receiving electronic apparatus.
(9). The transmitting electronic apparatus according to any one of (1) to (5), where the processing circuitry is configured to:
   determine the at least one first positional relationship and the second positional relationship based on control information for data transmission received from the at least one other transmitting electronic apparatus and the receiving electronic apparatus, where the control information includes information about a physical position of an electronic apparatus transmitting the control information.
(10). The transmitting electronic apparatus according to (9), where the control information is sidelink control information (SCI), and the SCI is a first-stage SCI as control information transmitted on a control channel or a second-stage SCI as control information transmitted on a data channel.
(11). The transmitting electronic apparatus according to any one of (1) to (8), where the processing circuitry is configured to determine, based on reference signal strengths of reference signals received from the at least one other transmitting electronic apparatus and the receiving electronic apparatus, a distance between the transmitting electronic apparatus and each of the at least one other transmitting electronic apparatus and a distance between the transmitting electronic apparatus and the receiving electronic apparatus, so as to determine the at least one first positional relationship and the second positional relationship.
(12). The transmitting electronic apparatus according to (4), where the processing circuitry is configured to use the candidate resource set corresponding to the transmitting electronic apparatus as the finally available resource set in a cased that the finally available resource is empty.
(13). The transmitting electronic apparatus according to any one of (1) to (12), where the processing circuitry is configured to select the finally available resource set in a scenario of sidelink resource selection mode 2.
(14). A receiving electronic apparatus for wireless communications, where the receiving electronic apparatus is configured to receive data from a transmitting electronic apparatus in communication with the receiving electronic apparatus, and the receiving electronic apparatus includes:
   processing circuitry, configured to:
   report information about a candidate resource set corresponding to the receiving electronic apparatus as assistance information to the transmitting electronic apparatus, where the candidate resource set is formed by time-frequency resource blocks used by the receiving electronic apparatus for receiving the data; and
   transmit positional relationship information about a positional relationship between the receiving electronic apparatus and the transmitting electronic apparatus to the transmitting electronic apparatus to cooperate with the transmitting electronic apparatus to select at least one time-frequency resource block for transmitting the data from a resource pool based on the assistance information and the positional relationship information.
(15). The receiving electronic apparatus according to (14), where the processing circuitry is configured to report the assistance information in response to a request transmitted by the transmitting electronic apparatus in an event-triggered mode.
(16). The receiving electronic apparatus according to (15), where the processing circuitry is configured to report the assistance information based on an assistance request field included in control information for data transmission,
   the assistance request field includes information about the request.
(17). The receiving electronic apparatus according to (16), where the control information is sidelink control information (SCI), and the SCI is a first-stage SCI as the control information transmitted on a control channel.
(18). The receiving electronic apparatus according to any one of (15) to (17), where the processing circuitry is configured to determine part of the time-frequency resource blocks in the candidate resource set as a physical sidelink shared channel (PSSCH), to transmit the assistance information.
(19). The receiving electronic apparatus according to any one of (14) to (15), where the processing circuitry is configured to include information about a physical position of the receiving electronic apparatus in control information for data transmission, as the positional relationship information.
(20). The receiving electronic apparatus according to (19), where the control information is sidelink control information (SCI), and the SCI is a first-stage SCI as the control information transmitted on a control channel or a second-stage SCI as the control information transmitted on a data channel.
(21). The receiving electronic apparatus according to any one of (14) to (18), where the processing circuitry is configured to transmit information about the physical position of the receiving electronic apparatus via radio resource control (RRC) signaling, as the positional relationship information.
(22). The receiving electronic apparatus according to any one of (14) to (18), where the processing circuitry is configured to transmit a reference signal to the transmitting electronic apparatus, for the transmitting electronic apparatus to determine a measured reference signal strength as the positional relationship information.
(23). The receiving electronic apparatus according to any one of (14) to (22), where the processing circuitry is configured to cooperate with the transmitting electronic apparatus to select the at least one time-frequency resource block in a scenario of sidelink resource selection mode 2.
(24). A method for wireless communications, performed by a transmitting electronic apparatus which transmits data to a receiving electronic apparatus in communication with the transmitting electronic apparatus, where the method includes:
   determining at least one first positional relationship between the transmitting electronic apparatus and at least one other transmitting electronic apparatus located within a predetermined range of the transmitting electronic apparatus, and a second positional relationship between the transmitting electronic apparatus and the receiving electronic apparatus;
   receiving information about a candidate resource set corresponding to the receiving electronic apparatus as assistance information, where the candidate resource set is formed by time-frequency resource blocks used by the receiving electronic apparatus for receiving the data; and
   selecting, based on the at least one first positional relationship, the second positional relationship and the assistance information, at least one time-frequency resource block for transmitting the data from a resource pool to form a finally available resource set.
(25). A method for wireless communications, performed by a receiving electronic apparatus which receives data from a transmitting electronic apparatus in communication with the receiving electronic apparatus, where the method includes:
   reporting information about a candidate resource set corresponding to the receiving electronic apparatus as assistance information to the transmitting electronic apparatus, where the candidate resource set is formed by time-frequency resource blocks used by the receiving electronic apparatus for receiving the data; and
   transmitting positional relationship information about a positional relationship between the receiving electronic apparatus and the transmitting electronic apparatus to the transmitting electronic apparatus to cooperate with the transmitting electronic apparatus to select at least one time-frequency resource block for transmitting the data from a resource pool based on the assistance information and the positional relationship information.
(26). A computer-readable storage medium storing computer-executable instruction, where when the computer-executable instructions are executed, the method for wireless communications according to (24) or (25) is performed.

## Claims

1. A transmitting electronic apparatus for wireless communications, wherein the transmitting electronic apparatus is configured to transmit data to a receiving electronic apparatus in communication with the transmitting electronic apparatus, and the transmitting electronic apparatus comprises:
processing circuitry, configured to:
determine at least one first positional relationship between the transmitting electronic apparatus and at least one other transmitting electronic apparatus located within a predetermined range of the transmitting electronic apparatus, and a second positional relationship between the transmitting electronic apparatus and the receiving electronic apparatus;
receive information about a candidate resource set corresponding to the receiving electronic apparatus as assistance information, wherein the candidate resource set is formed by time-frequency resource blocks used by the receiving electronic apparatus for receiving the data; and
select, based on the at least one first positional relationship, the second positional relationship and the assistance information, at least one time-frequency resource block for transmitting the data from a resource pool to form a finally available resource set.

2. The transmitting electronic apparatus according to claim 1, wherein
a distance between the transmitting electronic apparatus and each of the at least one other transmitting electronic apparatus is smaller than a distance between the transmitting electronic apparatus and the receiving electronic apparatus.

3. The transmitting electronic apparatus according to claim 2, wherein the processing circuitry is configured to:
for each of other transmitting electronic apparatuses in at least a part of the at least one other transmitting electronic apparatus, add an intersection of a candidate resource set corresponding to the each of other transmitting electronic apparatuses and the candidate resource set corresponding to the receiving electronic apparatus to a first set; and
use the first set as at least a part of the finally available resource set.

4. The transmitting electronic apparatus according to claim 3, wherein the processing circuitry is configured to:
use an intersection of a candidate resource set corresponding to the transmitting electronic apparatus and the candidate resource set corresponding to the receiving electronic apparatus as a second set; and
use at least a part of a union of the first set and the second set as the finally available resource set.

5. The transmitting electronic apparatus according to any one of claims 1 to 4, wherein the processing circuitry is configured to request, in an event-triggered mode, the receiving electronic apparatus to report the assistance information.

6. The transmitting electronic apparatus according to claim 5, wherein the processing circuitry is configured to transmit the request through an assistance request field comprised in control information for data transmission,
wherein the assistance request field comprises information about the request.

7. The transmitting electronic apparatus according to claim 6, wherein the control information is sidelink control information (SCI), and the SCI is a first-stage SCI as control information transmitted on a control channel.

8. The transmitting electronic apparatus according to claim 6 or 7, wherein the processing circuitry is configured to receive the assistance information from the receiving electronic apparatus based on the assistance request field in the control information received from the receiving electronic apparatus.

9. The transmitting electronic apparatus according to any one of claims 1 to 5, wherein the processing circuitry is configured to:
determine the at least one first positional relationship and the second positional relationship based on control information for data transmission received from the at least one other transmitting electronic apparatus and the receiving electronic apparatus,
wherein the control information comprises information about a physical position of an electronic apparatus transmitting the control information.

10. The transmitting electronic apparatus according to claim 9, wherein the control information is sidelink control information (SCI), and the SCI is a first-stage SCI as control information transmitted on a control channel or a second-stage SCI as control information transmitted on a data channel.

11. The transmitting electronic apparatus according to any one of claims 1 to 8, wherein the processing circuitry is configured to determine, based on reference signal strengths of reference signals received from the at least one other transmitting electronic apparatus and the receiving electronic apparatus, a distance between the transmitting electronic apparatus and each of the at least one other transmitting electronic apparatus and a distance between the transmitting electronic apparatus and the receiving electronic apparatus, so as to determine the at least one first positional relationship and the second positional relationship.

12. The transmitting electronic apparatus according to claim 4, wherein the processing circuitry is configured to use the candidate resource set corresponding to the transmitting electronic apparatus as the finally available resource set in a cased that the finally available resource is empty.

13. The transmitting electronic apparatus according to any one of claims 1 to 12, wherein the processing circuitry is configured to select the finally available resource set in a scenario of sidelink resource selection mode 2.

14. A receiving electronic apparatus for wireless communications, wherein the receiving electronic apparatus is configured to receive data from a transmitting electronic apparatus in communication with the receiving electronic apparatus, and the receiving electronic apparatus comprises:
processing circuitry, configured to:
report information about a candidate resource set corresponding to the receiving electronic apparatus as assistance information to the transmitting electronic apparatus, wherein the candidate resource set is formed by time-frequency resource blocks used by the receiving electronic apparatus for receiving the data; and
transmit positional relationship information about a positional relationship between the receiving electronic apparatus and the transmitting electronic apparatus to the transmitting electronic apparatus to cooperate with the transmitting electronic apparatus to select at least one time-frequency resource block for transmitting the data from a resource pool based on the assistance information and the positional relationship information.

15. The receiving electronic apparatus according to claim 14, wherein the processing circuitry is configured to report the assistance information in response to a request transmitted by the transmitting electronic apparatus in an event-triggered mode.

16. The receiving electronic apparatus according to claim 15, wherein the processing circuitry is configured to report the assistance information based on an assistance request field comprised in control information for data transmission,
wherein the assistance request field comprises information about the request.

17. The receiving electronic apparatus according to claim 16, wherein the control information is sidelink control information (SCI), and the SCI is a first-stage SCI as the control information transmitted on a control channel.

18. The receiving electronic apparatus according to any one of claims 15 to 17, wherein the processing circuitry is configured to determine part of the time-frequency resource blocks in the candidate resource set as a physical sidelink shared channel (PSSCH), to transmit the assistance information.

19. The receiving electronic apparatus according to any one of claims 14 to 15, wherein the processing circuitry is configured to comprise information about a physical position of the receiving electronic apparatus in control information for data transmission, as the positional relationship information.

20. The receiving electronic apparatus according to claim 19, wherein the control information is sidelink control information (SCI), and the SCI is a first-stage SCI as the control information transmitted on a control channel or a second-stage SCI as the control information transmitted on a data channel.

21. The receiving electronic apparatus according to any one of claims 14 to 18, wherein the processing circuitry is configured to transmit information about the physical position of the receiving electronic apparatus via radio resource control (RRC) signaling, as the positional relationship information.

22. The receiving electronic apparatus according to any one of claims 14 to 18, wherein the processing circuitry is configured to transmit a reference signal to the transmitting electronic apparatus, for the transmitting electronic apparatus to determine a measured reference signal strength as the positional relationship information.

23. The receiving electronic apparatus according to any one of claims 14 to 22, wherein the processing circuitry is configured to cooperate with the transmitting electronic apparatus to select the at least one time-frequency resource block in a scenario of sidelink resource selection mode 2.

24. A method for wireless communications, performed by a transmitting electronic apparatus which transmits data to a receiving electronic apparatus in communication with the transmitting electronic apparatus, wherein the method comprises:
determining at least one first positional relationship between the transmitting electronic apparatus and at least one other transmitting electronic apparatus located within a predetermined range of the transmitting electronic apparatus, and a second positional relationship between the transmitting electronic apparatus and the receiving electronic apparatus;
receiving information about a candidate resource set corresponding to the receiving electronic apparatus as assistance information, wherein the candidate resource set is formed by time-frequency resource blocks used by the receiving electronic apparatus for receiving the data; and
selecting, based on the at least one first positional relationship, the second positional relationship and the assistance information, at least one time-frequency resource block for transmitting the data from a resource pool to form a finally available resource set.

25. A method for wireless communications, performed by a receiving electronic apparatus which receives data from a transmitting electronic apparatus in communication with the receiving electronic apparatus, wherein the method comprises:
reporting information about a candidate resource set corresponding to the receiving electronic apparatus as assistance information to the transmitting electronic apparatus, wherein the candidate resource set is formed by time-frequency resource blocks used by the receiving electronic apparatus for receiving the data; and
transmitting positional relationship information about a positional relationship between the receiving electronic apparatus and the transmitting electronic apparatus to the transmitting electronic apparatus to cooperate with the transmitting electronic apparatus to select at least one time-frequency resource block for transmitting the data from a resource pool based on the assistance information and the positional relationship information.

26. A computer-readable storage medium storing computer-executable instructions, wherein when the computer-executable instructions are executed, the method for wireless communications according to claim 24 or 25 is performed.
